# EUROPEAN PATENT APPLICATION

(11) **EP 4 575 688 A1**
(43) Date of publication of application: **25.06.2025**
(21) Application number: 23386135.0
(22) Date of filing: 19.12.2023
(51) Int. Cl.: G05B 23/02

(54) **PREDICTIVE MAINTENANCE AND ANOMALY DETECTION OF PUMP SYSTEMS**

(71) Applicant: Schneider Electric Systems USA, Inc., Foxborough, MA 02035 (US)
(72) Inventor: MURTHY, Abhishek, Wilmington, MA 01887 (US); CHIKHAOUI, Belkacem, Montreal, QC, H1M 3G7 (CA); GEROULAS, Vasileios, Northville, Michigan 48167 (US)
(74) Representative: Friese Goeden Patentanwälte PartGmbB

(57) **Abstract**

An asset health system includes an edge-based computing device that receives high-granularity asset data for an asset from an asset data source or asset database and receives contextual data from a contextual database. The edge-based computing device processes the asset data and the contextual data with a machine-learned model. The machine-learned model includes processor-executable instructions for extracting run cycle data from the asset data to determine a run cycle of the asset, creating a feature vector based on the asset data that characterizes the run cycle, comparing the feature vector to a nominal feature vector to detect one or more anomalies, validating the one or more detected anomalies with the contextual data, determining a health index for the asset based on the one more anomalies, determining a mitigating action for mitigating the anomalies, and notifying a system operator regarding the one or more detected anomalies, health index, and mitigating actions such as a maintenance schedule.

## Description

### FIELD

The present disclosure generally relates to an asset health system for detecting anomalies during the operation of a pump.

### BACKGROUND

Pump systems are used across a wide range of industries for conveying fluids. Often, fluids conveyed by a pump system include solids, which may cause blockages within the pump system. Blockages disrupt normal operations of the pump system and can result in system failure and emergency shutdowns. Furthermore, the solids may include abrasive materials that can damage components of the pump system. Recovering from such blockages and damages is very costly and requires an intensive amount of time and effort from system operators.

Wastewater treatment processes, for example, regularly use pump systems for transporting wastewater to wastewater treatment facilities. Moreover, pump systems are used to process the wastewater such that solids are removed from the wastewater before recirculating the water back into the environment. Consequently, pump systems used in wastewater treatment processes are especially prone to blockages and damaged components from the solids suspended within the wastewater. When a blockage occurs within the system or a component of the system is damaged, the wastewater system as a whole may become overwhelmed to a point where there is no optimal way to contain and process the wastewater. These situations can pose extremely dangerous and expensive consequences.

Therefore, there is a need for an improved framework for mitigating pump system failures.

### SUMMARY

Aspects of the present disclosure permit an asset health system and methods for detecting one or more anomalies during the operation of one or more assets of an industrial system, such as pumps, to prevent or mitigate damages caused by the one or more anomalies.

In one aspect, an asset health system detects one or more anomalies during operation of an asset of an industrial process, which is coupled via the cloud to an industrial control system supervising and monitoring the industrial process. The system comprises one or more asset data sources configured to collect asset data associated with the asset. The asset data is indicative of at least one operational characteristic of the asset. An edge computing device is operably connected to the one or more asset data sources for loading the asset data. The edge computing device is configured to execute processor-executable instructions to process the asset data at a higher granularity than the industrial control system to detect one or more anomalies in the operation of the asset.

In another aspect, a computer-implemented method for detecting one or more anomalies during operation of a pump within a pump system comprises receiving pump data for the pump from one or more pump data sources. The pump data is indicative of at least one operational characteristic of the pump. The received pump data is processed with a machine-learned model to extract run cycle data to determine one or more run cycles of the pump, create a feature vector for each of the run cycles, and compare each feature vector to a nominal feature vector to detect one or more anomalies in the operation of the pump during each of the run cycles.

In yet another aspect, a computer-implemented method for detecting one or more anomalies during operation of a pump comprises receiving pump data from a pump data source. Contextual data is received from an external contextual data source. The pump data and the contextual data is processed with a machine-learned model to extract run cycle data representative of one or more run cycles of the pump, create a feature vector corresponding to each of the run cycles, compare the feature vector corresponding to each of the run cycles to a nominal feature vector, detect one or more anomalies in the operation of the pump during each of the run cycles when the feature vector corresponding thereto deviates from the nominal feature vector by more than a predetermined threshold, and validate each of the one or more anomalies with the contextual data.

### BRIEF DESCRIPTION OF THE DRAWINGS

FIG. 1 is a schematic block diagram illustrating an asset health system according to an embodiment.
FIG. 2 is a schematic block diagram illustrating a workflow of the asset health system according to an embodiment.
FIG. 3 is a flow diagram illustrating a method for detecting an anomaly during the operation of a pump.

Corresponding reference characters indicate corresponding parts throughout the drawings.

### DETAILED DESCRIPTION

This disclosure generally pertains to an asset health system that can be used to timely detect one or more anomalies during the operation of assets of an industrial process. In an embodiment, the asset health system monitors one or more pumps within a pump system in order to prevent or mitigate damages caused by the anomaly. The asset health system monitors and analyzes high-granularity, or high resolution, pump data with an edge computing device to detect one or more anomalies during operation of the pump system, and determines a health index for each pump and the system a whole. The health index provides insight to a system operator regarding each pump's health as well as the health of the entire pump system, so that the system operator can effectively schedule maintenance activities and prevent pump system failures. Furthermore, the asset health system compares the pump data with contextual data to ensure the accuracy of the one or more detected anomalies and the health index, as will be explained in further detail below.

Conventional processes used to detect anomalies within the operation of a pump system contain several drawbacks. For example, in some instances the systems are based on traditional Supervisory Control and Data Acquisition (SCADA) systems that function with low-granularity, or low resolution, data, which does not provide optimal accuracy for detecting the anomalies. Additionally, traditional SCADA-based systems enable an automatic analysis of the low-granularity data that is often very simple and cannot be scaled to multiple pumps, let alone an entire pump system. In other instances, cloud-based systems are similarly limited, as they are not capable of leveraging high-granularity data streams necessary for the optimal detection of anomalies.

The present disclosure provides an asset health system that is used for detecting one or more anomalies during operation of one or more assets of an industrial process. In one example, the industrial process is coupled via the cloud to an industrial control system that supervises and monitors the industrial process. The asset health system broadly comprises one or more asset data sources configured to collect asset data associated with the asset that is indicative of at least one operational characteristic of the asset. Moreover, the asset health system comprises an edge computing device that is operably connected to one or more asset data sources for loading the asset data. The edge computing device is configured to execute processor-executable instructions to process the asset data at a higher granularity than the industrial control system to detect one or more anomalies in the operation of the asset, as will be explained in further detail below.

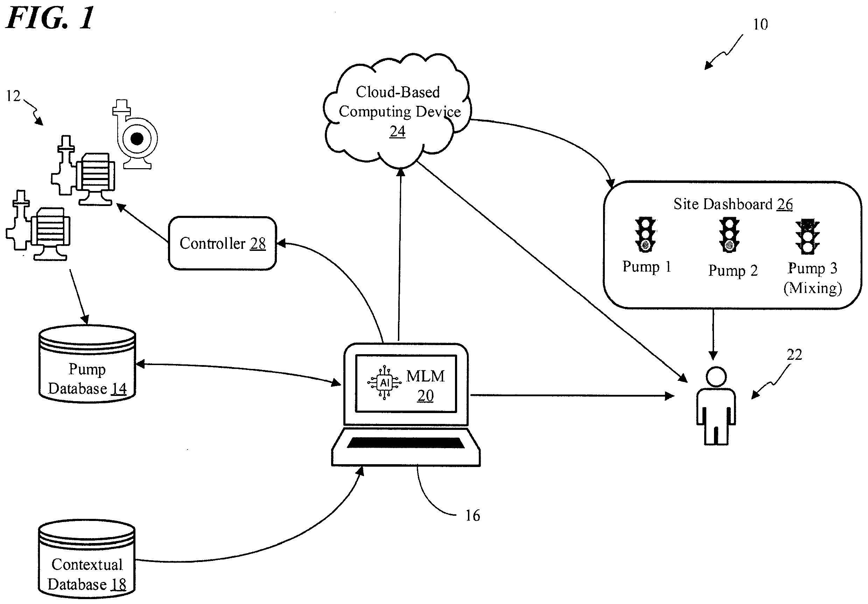

Referring now to FIG. 1 an asset health system in accordance with the present disclosure is generally indicated at reference number 10. In the illustrated embodiment, the asset health system 10 is applied within a pump system comprising one or more assets, shown as pumps 12. The asset health system 10 comprises one or more pump data sources (not shown), a pump database 14, edge computing device 16, contextual database 18, machine-learned model 20, and cloud-based computing device 24. The one or more pump data sources are configured to collect pump data from each of the pumps 12 and send the pump data to the pump database 14. The edge computing device 16 is operably connected to the pump database 14 and the contextual database 18 for loading the pump data and contextual data. The edge computing device 16 executes machine-learned model 20 to process the pump data and the contextual data to detect one or more anomalies during the operation of one or more pumps 12 and to determine a health index for each of the pumps 12. The cloud-based computing device 24 is operably connected to the edge computing device 16, and configured to notify a system operator 22 regarding detected anomalies and determined health index. The individual components of the asset health system 10 will now be described in greater detail before turning to exemplary methods of using the system to detect one or more anomalies during the operation of one or more pumps.

The asset data source includes one or more data collection devices such as controllers and sensors configured for collecting asset data from each asset. More particularly, the asset data sources are configured for high frequency polling of operational characteristics of each asset. In one example, the asset data sources are configured to collect asset data from each asset comprising multivariate time series data for tracking changes in the operational characteristics of each asset over time. Furthermore, the asset data comprises high granularity data that can be used to detect one or more anomalous cycles during the operation of the asset and used to capture detailed patterns in the operational cycles of the asset, as will be explained in further detail below. The high granularity asset data collected for each asset can vary depending on asset type.

In the illustrated embodiment, one or more pump data sources are configured to collect pump data comprising motor amperage, pump speed, flowrate, water level, running signal, station current, pump overload, pump fault, and pump thermal from a first pump type (e.g., Pump 1 and Pump 2), whereas the pump data collected for a second pump type (e.g., Pump 3 a mixing pump) comprises motor amperage, tank level, flowrate and pressure. In each case, the one or more pump data sources are configured to send the pump data to at least one of the pump database 14 for storage and the computing device 16 for processing.

Table 1 provides an example of a list of patterns that can be detected from the high granularity time series pump data collected from the one or more pump data sources.

**Table 1: Pattern Detection from Pump Data**

| **Pattern** | **Feature** |
|---|---|
| Variability of amps | 'iqr_crossing_ratio', 'p25_crossing_ratio', 'diffs_iqr_crossing_ratio', 'amp_var', 'amp_skew', 'amp_kurtosis' |
| # of step changes in amps, level, pressure | 'amp_drift', 'level_drift', 'pressure_drift' |
| Fraction of the cycle where tank level is increasing | 'level_increase_ratio' |
| Synchrony between flow and pressure | 'flow_pressure_corr', 'flow_pressure_dtw' |

The asset database 14 is configured to receive and store asset data from the one or more asset data sources. Additionally, the asset database 14 is configured to store one or more detected anomalies for each pump 12 and a health index for each pump determined by the edge-based computing device 16, as explained in further detail below. The contextual database 18 is configured to store contextual data received from an external source. The contextual data includes external factors that impact the performance or health of the pump, and is used to contextualize pump behavior determined from the pump data. The context for pump behavior provided by the contextual data aids in eliminating false-positive situations to provide a more accurate health index for each pump. Additionally, considering the contextual data with the pump data promotes pattern detection in pump behavior, which can be used to support pump system decisions such as determining when to schedule maintenance activities. In one example, the contextual data comprises weather data that impacts the performance of the pump 12. The weather data can be used to contextualize pump behavior such as poor pump performance during rain or snow periods due to the pumps being overwhelmed by a greater amount of fluid.

The edge-based computing device 16 includes a processor, a memory, user inputs, a display, and other related elements. The edge-based computing device 16 may also include circuit boards and/or other electronic components such as a transceiver or external connection for communicating with other devices of the asset health system 10. For example, the edge-based computing device 16 includes components such as wireless transceiver and/or wired connectors that connect the edge-based computing device to the one or more pump data sources, pump database 14, contextual database 18, and cloud-based computing device 24. Although the illustrated edge-based computing device 16 is schematically represented as a single desktop computer, it will be understood that the edge-based computing device can comprise other types of computing resources, e.g., one or more local computing devices, including Layer 0 devices of the Purdue Network Model for Industrial Control Systems.

In general, the edge-based computing device 16 is configured to receive the pump data from at least one of the one or more pump data sources and pump database 14, receive the contextual data from the contextual database 18, and execute the machine-learned model 20 to process the pump data with the contextual data. Accordingly, memory of the edge-based computing device 16 stores processor-executable instructions defining the machine-learned model 20 and a processor of the edge-based computing device is configured to execute the instructions to process the pump and contextual data to detect one or more anomalies during the operation of the pumps 12 to prevent or mitigate damages caused by the anomaly.

The machine-learned model 20 comprises instructions for the edge-based computing device 16 to execute to (I.) detect one or more anomalies during the operation of one or more pumps 12, (II.) validate each detected anomaly, (III.) assign a health index for each pump, (IV.) determine mitigating actions to improve the performance and health index of the pump, and (V.) determine whether to notify one or more system operators 22. With respect to point (I.), the machine-learned model 20 is configured to extract run cycle data from the pump data to determine one or more run cycles for the pump. A run cycle consists of the pump switching on, ramping up, pumping out water in a steady state until the water level reaches a desired point, and eventually ramping down. For example, running signal data, which is a binary indicator of when the pump is on (running), is extracted from the pump data, and used to determine a start and an end for each run cycle of the pump. From here, other pump data such as motor amps, pump speed, flowrate, water levels, station current pump overload, pump fault, and pump thermal are compiled into a feature vector to characterize the run cycle. The feature vector is compared to a nominal feature vector comprising pump data that characterizes a normal run cycle for the pump. Any deviation from the feature vector pump data and the nominal feature vector pump data provides an indication of an anomaly being present in the operation of the pump.

The machine-learned model 20 is configured to validate each anomaly by analyzing the pump data that deviates from the feature vector and the nominal feature vector with contextual data that correlates to the run cycle. The contextual data provides context for identifying an assignable cause of each deviation instance. If an assignable cause is identified, then the deviation instance may be eliminated, thereby not considering the deviation instance to indicate an anomaly. If no assignable cause is identified from the contextual data for a deviation instance, then the anomaly in the operation of the pump detected from the deviation instance is validated. The machine-learned model 20 is configured to store each detected and validated anomaly within the pump database 14. For example, ambient weather, specifically precipitation can be used to assign excessive rainfall as a cause for a run cycle deviating from nominal patterns. Rainfall can increase tank levels involved in the pump system beyond nominal values, thereby causing deviation in the feature vector. In another example, the time of the day, day of the week, and other seasonal factors are used for creating specific machine-learning models for better performance.

The machine-learned model 20 is further configured to assign a health index that is representative of the pump's health and performance based on the one or more detected anomalies for each pump. In an exemplary embodiment, the health index for a pump is assigned based on a frequency of each anomaly and a magnitude of each anomaly determined by the machine-learned model 20. For example, the machine learned model 20 is configured to assign a poor health index for a pump when there are several frequent anomalies detected in one or more run cycles of the pump. In another example, the machine-learned model 20 is configured to assign a poor health index for a pump when an anomaly is classified as having a high magnitude, which indicates that the one or more anomalies will cause severe damages if not handled immediately. In one embodiment, the machine-learned model 20 is configured to update the health index for a pump after each run cycle of the pump. In another embodiment, the asset health system 10 is configured to operate in a batch mode wherein the machine-learned model 20 updates the health index for each pump after a batch of run cycles of the pump. Moreover, the machine-learned model 20 is configured to analyze each pump's health index to determine an overall health index for the pump system.

In an exemplary embodiment, the machine-learned model 20 is configured to utilize the health index to determine a remaining useful life for the pump. The machine-learned model 20 is configured to assess the health of an asset by calculating the health index over time. To estimate the remaining useful life of an asset, the rate of change in the health index along with the patterns detected can be used to extrapolate the health index and estimate when it will reach a pre-determined critical threshold, after which the asset is assumed to be non-functional and needs to be replaced. Determining the remaining useful life for an asset enables system operators to plan maintenance and replacements more effectively. The machine-learned model 20 is configured to store the health index for each pump, the health index for the entire pump system, and the remaining useful life for each pump in the pump database 14.

The machine-learned model 20 is further configured to determine one or more mitigating actions for eliminating detected anomalies, prolonging the remaining useful life of the pump and pump system, and improving pump and pump system performance. In one embodiment, the mitigating actions include opportunistic maintenance for the pumps 12 and adjusting a workload for each pump. The machine-learned model 20 is configured to analyze the health index for a pump 12 to determine when to schedule one or more maintenance activities for the pump. For example, if the pump 12 has indicated a healthy performance via the health index and is free of anomalies, then any pre-scheduled maintenance can be delayed to a more opportune time. The machine-learned model 20 analyzes the health index for each pump 12 in the pump system to determine how to adjust a workload for each pump to achieve optimal operating conditions of the entire pump system. For example, if a pump 12 is showing poor performance via the health index and includes a plurality of anomalies, then a duty cycle of the pump is reduced to take a load off of the pump. The one or more mitigating actions determined by the machine-learned model 20 may be automatically executed within the pump system via a controller 28 of the asset health system 10.

With respect to point (V.) from above, the machine-learned model 20 is configured to compare the health index to a predetermined criticality threshold to determine whether to notify a system operator 22 regarding the health index. For example, the machine-learned model 20 determines to notify the system operator 22 regarding at least one of the health index and the one or more detected anomalies via at least one of a display of the edge-based computing device 16 and the cloud-based computing device 24, when the health index meets or exceeds the predetermined criticality threshold. Additionally, if the machine-learned model 20 determines to notify the system operator 22, the one or more mitigating actions determined for eliminating anomalies and improving pump performance, are communicated to the system operator 22.

Still referring to FIG. 1, the cloud-based computing device 24 is operably connected to the edge computing device 16 for loading the one or more detected anomalies to the industrial control system and notifying the system operator 22 regarding at least one of the one or more detected anomalies, health index, and one or more mitigating actions. In one embodiment, the cloud-based computing device 24 notifies the system operator 22 via a site dashboard 26. The site dashboard 26 comprises at least one of the one or more detected anomalies for each pump, the health index for each pump, the health index for the pump system, the remaining useful life for each pump, and the one or more mitigating actions determined for each pump to communicate operating conditions of each pump and the pump system as a whole to the system operator 22. In another embodiment, the cloud-based computing device 24 is configured to notify one or more system operators 22 by opening a case for a pump, wherein the case indicates that system operator attention is required. The cloud-based computing device 24 is configured to interpret the health index based on business logic such as asset criticality, data quality, and tolerances for false positives to determine whether or not to open a case. In one example, the cloud-based computing device 24 opens a case if the machine-learned model 20 determines that the health index meets or exceeds the criticality threshold.

In an exemplary embodiment, the machine-learned model 20 that calculates the health index based on time, is running within cloud-to-edge infrastructure. In one example, the infrastructure has an embedded alarms management system to provide notifications to end users whenever needed. The machine-learned model 20 is further configured to be integrated with other third-party systems through the use of one or more application programming interfaces (APIs). For example, representational state transfer (REST) APIs can be used to integrate the asset health system 10 including the machine-learned model 20 with work order management systems of computerized maintenance management systems (CMMS). With the integration, a case can be opened directly in the aforementioned third-party system, and then the standard workflow for the mitigation or resolution of the case may be followed.

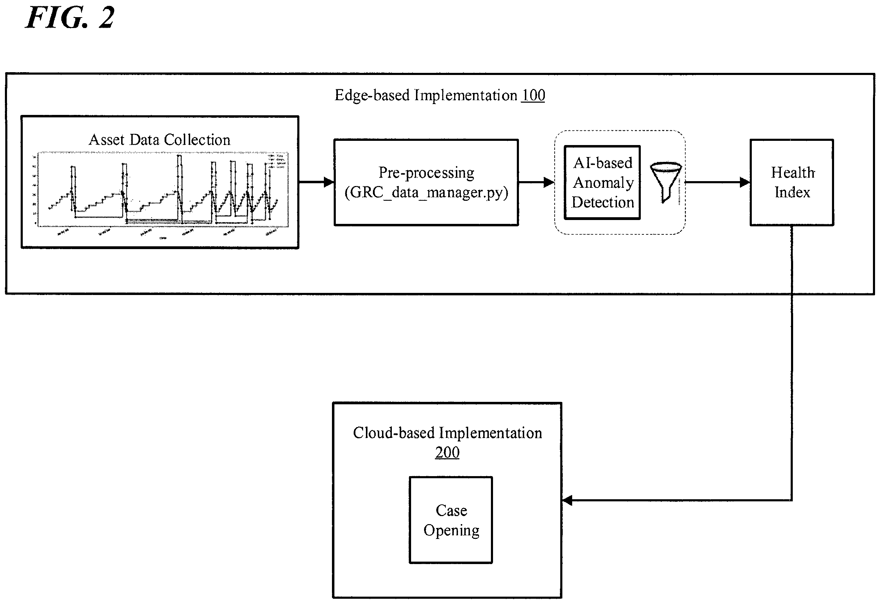

Referring now to FIG. 2 a schematic block diagram illustrating a workflow of the asset health system 10 including edge-based implementation processes 100 and cloud-based implementation process 200 is shown according to an embodiment. The edge-based implementation processes 100 include processes carried out by the asset health system 10 on the edge, whereas the cloud-based implementation process 200 includes a process carried out by the asset health system on the cloud. Advantageously, the asset health system 10 is configured to execute both of the edge-based implementation processes 100 and cloud-based implementation processes 200 to detect and communicate one or more anomalies during the operation of one or more pumps 12 to harvest the advantages of both edge-based and cloud-based systems. For example, high-granularity data for the pumps 12 is collected and processed on the edge to produce more robust and early warnings of anomalies detected during the operation of the pumps 12. Notification processes are effectively carried out on the cloud for notifying one or more system operators 22 regarding the anomalies, health indexes, and mitigating actions.

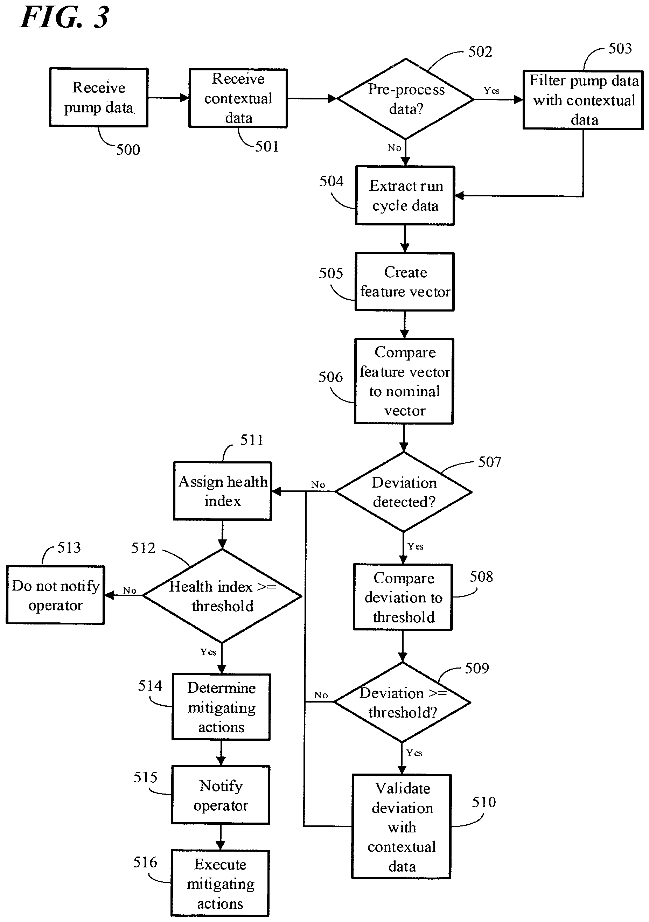

Referring now to FIG. 3, an exemplary embodiment of a computer-implemented method for detecting one or more anomalies during the operation of a pump within a pump system is shown. The method begins at 500 where the edge-based computing device 16 receives pump data from at least one of the pump data sources and pump database 14. At 501, the edge-based computing device 16 receives contextual data from the contextual database 18. Next, it is determined at decision point 502 whether to pre-process the pump data and the contextual data. At 503, pre-processing involves filtering the pump data with the contextual data. For example, pump data can be filtered to account for weather patterns and other expected trends of corresponding contextual data. From here, the edge computing device 16 executes the machine-learned model 20 to process the pump data and the contextual data.

At 504, the machine-learned model 20 begins processing the pump data by extracting run cycle data from the pump data. For example, this includes determining when each run cycle for the pump starts and stops. Once each run cycle is determined, a feature vector for each run cycle is created at step 505. The feature vector is created to include pump data that is indicative of at least one operational characteristic of the pump during the run cycle in order to characterize operating conditions of the pump during the run cycle. After the feature vector for a run cycle is created, the feature vector is compared to a nominal feature vector (step 506). At decision point 507 it is determined whether deviation is detected from the pump data in the feature vector and the pump data in the nominal feature vector based on the comparison at 506. Deviation from the feature vector pump data and the nominal feature vector pump data provides an indication that an anomaly is present during the operation of the pump. If no deviation is detected, then the method proceeds to step 511 where a health index for the pump is assigned. In the instance that no deviation is detected, the health index will be assigned to indicate that no anomalies are present during the operation of the pump. If deviation is detected, then the method proceeds to step 508.

At step 508, the deviation is compared to a pre-determined deviation threshold to verify significance of the deviation. If the deviation meets or exceeds the pre-determined deviation threshold (decision point 509), then the method proceeds to step 510, otherwise the method proceeds to step 511 to assign a health index for the pump. At step 510, the deviation (each detected anomaly) is validated with the corresponding contextual data to eliminate deviation instances caused by external factors of the contextual data. Said differently, assignable causes for deviation instances are determined based on the corresponding contextual data to eliminate anomalies detected that are caused by the external factors of the contextual data. The remaining deviation instances indicate anomalies during the operation of the pump that are not caused by external factors of the contextual data. After the anomalies are validated, the method proceeds to step 511.

At step 511, the health index for the pump is determined based at least on the deviation instances and validated anomalies. More particularly, in one example, the machine-learned model 20 determines a magnitude and frequency of each detected anomaly, and determines a health index for the pump based on the magnitude of one or more anomalies and frequency of the anomalies. In an optional step (not shown) the machine-learned model 20 determines a remaining useful life for the pump based on the health index. In another optional step, the machine-learned model 20 determines a health index for the entire pump system based at least on the health indexes determined for each pump. At decision point 512, the health index for the pump is compared to a predetermined criticality threshold. If the health index is less than the predetermined criticality threshold, then the method proceeds to step 513 wherein a system operator is not notified. Otherwise, the method proceeds to step 514.

After it is determined that the health index meets or exceeds the predetermined criticality threshold, the machine-learned model 20 determines mitigating actions for improving the operating conditions of at least one of the pump and the pump system at step 514. At least one of the edge-based computing device 16 and cloud-based computing device 24 is configured to notify one or more system operators 22 regarding at least one of the one or more detected anomalies, health indexes, remaining useful life, and mitigating actions at step 515. At step 516 at least one of a controller 28 or system operator 22 executes the mitigating actions. The machine-learned model 20 stores at least one of the anomalies, health indexes, remaining useful life, and mitigating actions within the pump database 14.

It can be seen that the system and methods described herein provide accurate streamlined solutions for detecting one or more anomalies during the operation of an asset of an industrial process. Advantageously, the asset health system and methods in accordance with the present disclosure provide solutions for scheduling and implementing preventative and opportunistic maintenance for maintaining optimal operating conditions of the asset. Accordingly, the lifespan of an asset may be prolonged with the system and methods described herein. Furthermore, the present disclosure provides a hybrid system that incorporates both edge and cloud-based components, to provide robust and early detection of anomalous operation of one or more assets. The system combines contextual data with high-granularity asset data to support pattern detection of operating conditions of the assets and to provide a more accurate detection of anomalies. Additionally, the system and methods are scalable to be used with an entire pump system comprising a plurality of pumps. Systems and methods disclosed herein beneficially provide cost-savings solutions for mitigating and preventing damages caused by one or more anomalies occurring during the operation of an asset.

Embodiments of the present disclosure comprise a special purpose computer including a variety of computer hardware, as described in greater detail herein and are operational with other special purpose computing system environments or configurations even if described in connection with an example computing system environment. The computing system environment is not intended to suggest any limitation as to the scope of use or functionality of any aspect of the invention. Moreover, the computing system environment should not be interpreted as having any dependency or requirement relating to any one or combination of components illustrated in the example operating environment. Examples of computing systems, environments, and/or configurations that may be suitable for use with aspects of the present disclosure include, but are not limited to, personal computers, server computers, hand-held or laptop devices, multiprocessor systems, microprocessor-based systems, set top boxes, programmable consumer electronics, mobile telephones, network PCs, minicomputers, mainframe computers, distributed computing environments that include any of the above systems or devices, and the like.

Aspects of the present disclosure may be described in the general context of data and/or processor-executable instructions, such as program modules, stored one or more tangible, non-transitory storage media and executed by one or more processors or other devices. Generally, program modules include, but are not limited to, routines, programs, objects, components, and data structures that perform particular tasks or implement particular abstract data types. Aspects of the present disclosure may also be practiced in distributed computing environments where tasks are performed by remote processing devices that are linked through a communications network. In a distributed computing environment, program modules may be located in both local and remote storage media including memory storage devices. For purposes of illustration, programs and other executable program components may be shown as discrete blocks. It is recognized, however, that such programs and components reside at various times in different storage components of a computing device, and are executed by a data processor(s) of the device.

In operation, processors, computers, and/or servers may execute the processor-executable instructions (e.g., software, firmware, and/or hardware) such as those illustrated herein to implement aspects of the invention. The processor-executable instructions may be organized into one or more processor-executable components or modules on a tangible processor readable storage medium. Also, embodiments may be implemented with any number and organization of such components or modules. For example, aspects of the present disclosure are not limited to the specific processor-executable instructions or the specific components or modules illustrated in the figures and described herein. Other embodiments may include different processor-executable instructions or components having more or less functionality than illustrated and described herein.

The order of execution or performance of the operations in accordance with aspects of the present disclosure illustrated and described herein is not essential, unless otherwise specified. That is, the operations may be performed in any order, unless otherwise specified, and embodiments may include additional or fewer operations than those disclosed herein. For example, it is contemplated that executing or performing a particular operation before, contemporaneously with, or after another operation is within the scope of the present disclosure.

Not all of the depicted components illustrated or described may be required. In addition, some implementations and embodiments may include additional components. Variations in the arrangement and type of the components may be made without departing from the spirit or scope of the claims as set forth herein. Additional, different or fewer components may be provided and components may be combined. Alternatively, or in addition, a component may be implemented by several components.

Having described the invention in detail, it will be apparent that modifications and variations are possible without departing from the scope of the invention defined in the appended claims.

When introducing elements of the present invention or the preferred embodiments(s) thereof, the articles "a", "an", "the" and "said" are intended to mean that there are one or more of the elements. The terms "comprising", "including" and "having" are intended to be inclusive and mean that there may be additional elements other than the listed elements.

In view of the above, it will be seen that the several objects of the invention are achieved and other advantageous results attained.

As various changes could be made in the above products without departing from the scope of the invention, it is intended that all matter contained in the above description and shown in the accompanying drawings shall be interpreted as illustrative and not in a limiting sense.

Accordingly, the present invention may also be described as follows: An asset health system includes an edge-based computing device that receives high-granularity asset data for an asset from an asset data source or asset database and receives contextual data from a contextual database. The edge-based computing device processes the asset data and the contextual data with a machine-learned model. The machine-learned model includes processor-executable instructions for extracting run cycle data from the asset data to determine a run cycle of the asset, creating a feature vector based on the asset data that characterizes the run cycle, comparing the feature vector to a nominal feature vector to detect one or more anomalies, validating the one or more detected anomalies with the contextual data, determining a health index for the asset based on the one more anomalies, determining a mitigating action for mitigating the anomalies, and notifying a system operator regarding the one or more detected anomalies, health index, and mitigating actions.

## Claims

1. Asset health system for detecting one or more anomalies during operation of an asset of an industrial process, the industrial process coupled via the cloud to an industrial control system supervising and monitoring the industrial process, the asset health system comprising:
one or more asset data sources configured to collect asset data associated with the asset, the asset data indicative of at least one operational characteristic of the asset; and
an edge computing device operably connected to the one or more asset data sources for loading the asset data, the edge computing device configured to execute processor-executable instructions to process the asset data at a higher granularity than the industrial control system to detect one or more anomalies in the operation of the asset.

2. Asset health system of claim 1, wherein the industrial process has a plurality of assets, wherein the one or more asset data sources are configured to collect the asset data associated with the plurality of assets of the industrial process, and wherein the edge computing device processes the asset data for the plurality of assets to detect one or more anomalies during operation of the industrial process.

3. Asset health system of claim 1 or claim 2, further comprising a cloud-based computing device operably connected to the edge computing device for loading the one or more detected anomalies to the industrial control system, the cloud-based computing device configured to notify an operator regarding the one or more detected anomalies.

4. Asset health system of claim 3, wherein the processor-executable instructions are further configured to determine one or more mitigating actions for optimizing the operation of the asset based on the one or more detected anomalies.

5. Asset health system of claim 4, wherein at least one of the edge-computing device and the cloud-based computing device is configured to communicate at least one of the one or more detected anomalies and the one or more mitigating actions to an operator.

6. Asset health system of claim 4 or claim 5, further comprising a controller configured to automatically execute the one or more mitigating actions, wherein at least one of the mitigating actions comprises adjusting a workload of one or more assets of the industrial process based on one or more of the detected anomalies,

7. Asset health system of any one of claims 1 to 6, wherein the asset comprises a pump and wherein the processor-executable instructions comprise a machine-learned model configured extract run cycle data to determine one or more run cycles of the pump, create a feature vector for each of the run cycles, and compare each feature vector to a nominal feature vector to detect one or more anomalies in the operation of the pump during each of the run cycles.

8. Computer-implemented method for detecting one or more anomalies during operation of a pump within a pump system, the method comprising:
receiving pump data for the pump from one or more pump data sources, the pump data indicative of at least one operational characteristic of the pump;
processing the received pump data with a machine-learned model to:
extract run cycle data to determine one or more run cycles of the pump;
create a feature vector for each of the run cycles;
compare each feature vector to a nominal feature vector to detect one or more anomalies in the operation of the pump during each of the run cycles.

9. Method of claim 8, further comprising determining a health index for the pump based on at least one of determining a magnitude of each of the detected one or more anomalies and determining a frequency of each of the detected one or more anomalies.

10. Method of claim 9, wherein the pump system comprises a plurality of pumps, and further comprising determining a system health index for the pump system based on at least the health index of each of the plurality of pumps in the pump system.

11. Method of claim 9 or claim 10, further comprising comparing the health index of the pump to a predetermined criticality threshold, and notifying a plant operator if the health index meets or exceeds the criticality threshold.

12. Method of any one of claims 9 to 11, further comprising storing at least one of the pump data, run cycle data, feature vector, nominal feature vector, one or more anomalies, and a health index for the pump within a pump system database.

13. Method of any one of claims 8 to 12, further comprising determining one or more mitigating actions to improve the operation of the pump, wherein the one or more mitigating actions comprises at least one of scheduling maintenance for the pump based at least on the health index for the pump or determining a remaining useful life of the pump based on the health index.

14. Method of any one of claims 8 to 13, further comprising receiving contextual data from an external contextual data source; processing the pump data and the contextual data with the machine-learned model to:
extract run cycle data representative of one or more run cycles of the pump;
create a feature vector corresponding to each of the run cycles, wherein each run cycle is characterized based on one or more operating characteristics of the pump during the run cycle;
compare the feature vector corresponding to each of the run cycles to a nominal feature vector;
detect one or more anomalies in the operation of the pump during each of the run cycles when the feature vector corresponding thereto deviates from the nominal feature vector by more than a predetermined threshold; and
validate each of the one or more anomalies with the contextual data to determine if the contextual data caused the one or more detected anomalies.

15. The method of claim 14, further comprising filtering at least one of the pump data and contextual data based on one or more parameters.
